(19) Europäisches Patentamt
European Patent Office
Office européen des brevets

(11) **EP 1 340 580 B1**

(12) **FASCICULE DE BREVET EUROPEEN**

(45) Date de publication et mention
de la délivrance du brevet:
**03.05.2006 Bulletin 2006/18**

(51) Int Cl.:
***B23K 10/00*** *(2006.01)*

(21) Numéro de dépôt: **03290478.1**

(22) Date de dépôt: **28.02.2003**

(54) **Instrument de projection thermique**

Einrichtung zum thermischen Spritzen

Thermal projecting device

(84) Etats contractants désignés:
**CH DE FR GB IT LI NL**

(30) Priorité: **28.02.2002 FR 0202523**

(43) Date de publication de la demande:
**03.09.2003 Bulletin 2003/36**

(73) Titulaire: **SNECMA SERVICES**
**75015 Paris (FR)**

(72) Inventeurs:
• **Vardelle, Michel**
**87590 Saint-Just le Matel (FR)**
• **Bossoutrot, Cédric**
**19700 Lagraulière (FR)**
• **Hoffmann, Hakim**
**42000 Saint-Etienne (FR)**
• **Renault, Thierry**
**55455 Minneapolis (US)**
• **Braillard, Frédéric**
**86100 Chatellerault (FR)**

(74) Mandataire: **Nguyen, Dominique**
**Snecma Moteurs**
**Département Propriété Industrielle**
**W/DJB**
**Site de Villaroche**
**77550 Moissy Cramayel (FR)**

(56) Documents cités:
**US-E- R E36 926**

• **PATENT ABSTRACTS OF JAPAN vol. 015, no. 138 (M-1100), 8 avril 1991 (1991-04-08) & JP 03 018484 A (DAIDO STEEL CO LTD;OTHERS: 01), 28 janvier 1991 (1991-01-28)**
• **PATENT ABSTRACTS OF JAPAN vol. 1998, no. 11, 30 septembre 1998 (1998-09-30) & JP 10 153554 A (HORIBA LTD), 9 juin 1998 (1998-06-09)**
• **CHEN ET AL.: "intelligent methodology for sensing, modeling and control of pulsed gtaw: part I - bead-on-plate welding" WELDING RESEARCH, juin 2000 (2000-06), pages 151s-163s, XP000954653**
• **DOUMANIDIS ET AL.: "distributed-parameter control of the heat source trajectory in thermal materials processing" JOURNAL OF MANUFACTURING SCIENCE AND ENGINEERING, vol. 118, novembre 1996 (1996-11), pages 571-578, XP000635785**

## Description

### Domaine technique de l'invention

L'invention se rapporte au revêtement de surfaces par projection thermique de matières en fusion à l'aide d'une torche de projection thermique, appelée ci-après torche, et plus particulièrement à un instrument de projection thermique comportant un dispositif de contrôle et de pilotage de la projection thermique.

### Etat de la technique et problème posé

La projection thermique est un procédé bien connu pour revêtir une surface solide par une matière présentant un point du fusion élevé. Elle consiste à fondre la matière dans un flux de gaz chaud à grande vitesse dirigé sur la surface, le flux de gaz provoquant la pulvérisation de la matière en fines gouttelettes fondues et l'entraînement des gouttelettes vers la surface, les gouttelettes encore à l'état fondu s'écrasant sur la surface, les gouttelettes adhérant à cette surface et se solidifiant à son contact. Le flux de gaz chargé de gouttelettes en fusion est appelé jet. Le revêtement est obtenu par passes successives en déplaçant le jet par rapport à la surface.
La projection thermique peut être utilisée dans différents buts : décoration, barrière thermique, protection contre l'oxydation ou la corrosion chimique, rechargement de matière, augmentation des caractéristiques mécaniques de la surface, notamment de sa résistance à l'abrasion, etc.
La matière projeté peut être un métal pur tel le molybdène ou le titane, un alliage métallique tel le NiCr, le NiAl, le NiCrAlY, une céramique telle le Cr2O3 ou le ZrO2, un carbure tel le WC ou le Cr3C2, ou un cermet tel le Cr3C2/NiCr.
On connaît différents procédés de projection thermique utilisant chacun une torche particulière.
La projection thermique dite "à la flamme" consiste à produire une flamme par la combustion de gaz à haut pouvoir calorifique tels l'acétylène et l'oxygène, l'élévation de température produisant un courant gazeux à grande vitesse dans lequel on injecte la matière à projeter sous la forme de poudre ou de fil. La matière fond au contact de la flamme, se pulvérise en fines gouttelettes dans le flux de gaz chauds de combustion et est entraîné par ce flux pour former le jet.
La projection thermique dite "par arc-fil" consiste à produire un arc électrique entre deux fils de la matière à projeter et à faire passer un flux de gaz neutre, tel de l'argon Ar, à grande vitesse sur l'arc électrique. La matière des fils se liquéfie en présence de l'arc électrique, se pulvérise en fines gouttelettes dans le flux de gaz chauds de combustion et est entraîné par ce flux pour former le jet.
La projection thermique dite "par arc plasma" consiste à produire de la chaleur en entretenant un arc électrique dans un flux de gaz plasmagène, la formation de plasma provoquant une forte élévation de la température du gaz, et à injecter dans ce flux la matière en poudre à projeter, cette poudre étant fluidisée et transportée par un gaz neutre dit "porteur". L'ensemble constitué par le gaz plasmagène, le gaz porteur et la matière fondue en fines gouttelettes au contact du gaz plasmagène forme le jet.
Le jet à la sortie de la torche a la forme d'un cône divergeant. A cause des hautes températures mises en oeuvre, une torche se dégrade progressivement en exploitation, cette dégradation provoquant des dérives dans son fonctionnement ainsi que des déformations et des déviations du jet. Dans certains types de torche à arc-plasma, l'injection de poudre se fait à la sortie de la torche transversalement au flux de gaz plasmagène, ce qui provoque une déviation normale du jet,
**[0008]** La torche est habituellement de petite taille afin d'être commodément déplacée devant la surface à recouvrir. Cette torche est reliée à une armoire de commande qui l'alimente en courant électrique et en les différents ingrédients nécessaires à son fonctionnement. Par ingrédients, on entend les gaz et les matières décrites ci-dessus.
Les critères de qualité d'un dépôt effectué par projection thermique sont habituellement sa dureté, son adhérence a la surface revêtue, sa porosité, l'absence de criques, le taux d'infondus et, dans le cas de matières métalliques, son taux d'oxyde. Par le terme "taux d'infondus" on entend la proportion de la matière constituant le dépôt qui n'est pas passé par l'état fondu. On fait également attention au rendement de la projection, c'est à dire à la proportion de la matière utilisée qui constituera effectivement le dépôt, le reste de la matière se perdant sur les parois entourant l'installation de projection thermique.
La qualité du dépôt et le rendement de l'opération de dépôt dépendent évidemment de la matière employée mais aussi du réglage et du type de la torche. Le débit de matière, par exemple en grammes par minute, est évidemment un paramètre commun à toutes les torches. Dans le cas de la projection à la flamme, il faut régler aussi les débits de gaz carburant et comburant exprimés par exemple en litres par minute. Dans le cas d'une projection par arc-fil, il faut régler aussi l'intensité d'arc en ampères et le débit de gaz. Dans le cas d'une projection par arc-plasma, il faut régler aussi l'intensité d'arc, le débit de gaz plasmagène et le débit de gaz porteur.
Une qualité de dépôt constante est difficile à assurer car la torche et son alimentation en ingrédients font l'objet d'incertitudes et de dérives dans le temps qui modifient évidemment cette qualité. Avant d'effectuer des opérations d'enduction, il est nécessaire d'essayer la torche sur des échantillons et d'ajuster les réglages en cas de besoin. Mais cela ne suffit pas. Pendant les opérations d'enduction, Il est également nécessaire d'effectuer périodiquement des contrôles à partir d'échantillons et de modifier les réglages, voire de changer la torche en cas de besoin. En effet, une torche se dégrade progressivement en exploitation, notamment dans ses parties chaudes telles la buse d'éjection, ces dégradations pouvant faire dériver les caractéristiques de la torche et déformer ou déplacer le jet. Ces contrôles doivent être fréquents afin de pouvoir détecter suffisamment tôt l'apparition d'une dérive et de pouvoir modifier les réglages de la torche, avant que la qualité du dépôt ait elle-même dérivé en dehors des limites acceptables. Ces contrôles et ces réglages prennent évidemment du temps et réduisent la productivité de l'installation. De plus, dans le cas d'opérations d'enduction longues, il peut être nécessaire de l'interrompre pour contrôler la torche ou la qualité du dépôt et, s'il y a lieu, modifier le réglage de la torche ou de la remplacer.

Un premier problème à résoudre est de vérifier que la torche est en mesure d'assurer un dépôt dont les caractéristiques sont conformes à ce qui était prévu, cette vérification devant nécessairement s'effectuer en temps réel pendant une opération de projection thermique, et de corriger également en temps réel le fonctionnement de cette torche lorsque des dérives sont constatées.

Un second problème est d'arriver à ces résultats par des moyens peu coûteux.

Un troisième problème est d'arrêter automatiquement la torche lorsqu'elle n'est plus en mesure de fonctionner normalement et qu'elle risque en conséquence de produire des revêtements défectueux. Doumanidis et al. "distributed-parameter control of the heat source trajectory in thermal processing" décrit un instrument de projection thermique avec des moyens de contrôle, mais la luminance maximale du jet de plasma n'est pas déterminée, ne permettant pas d'obtenir un dépôt de particules en fusion qui soit de qualité.

### Exposé de l'invention

Pour résoudre le premier problème, l'invention propose un instrument de projection thermique comportant une torche de projection thermique, la torche étant susceptible de projeter un jet selon son axe géométrique, le jet étant constitué d'un flux de gaz à température élevée chargé de particules en fusion du matériau à projeter, l'instrument comportant une armoire de commande alimentant en ingrédients la torche en appliquant les paramètres d'alimentation qui lui sont communiqués, l'instrument comportant un ordinateur communiquant à l'armoire de commande les paramètres d'alimentation par l'intermédiaire d'une connexion armoire - ordinateur, l'instrument comportant des capteurs aptes à suivre les déplacements de la torche, les capteurs étant susceptible de transmettre à l'ordinateur des information sur le fonctionnement de la torche, cette transmission s'effectuant par l'intermédiaire de la connexion capteurs - ordinateur. Un tel instrument est remarquable en ce que :

a. l'ordinateur comporte un logiciel pour analyser en temps réel les informations, pour en déduire de façon répétitive la mesure d'au moins une caractéristique dite "de projection", pour repérer lorsque cette mesure est stabilisée, pour "traiter" cette caractéristique de projection, c'est à dire pour calculer et pour transmettre à l'armoire de commande une nouvelle valeur de paramètre d'alimentation lorsque la valeur mesurée de la caractéristique de projection est en dehors d'une plage de valeurs préétablie dite "acceptable" propre à la caractéristique de projection traitée, cette nouvelle valeur du paramètre d'alimentation étant appropriée pour rapprocher la caractéristique de projection vers sa plage acceptable.

b. les capteurs comportent une caméra susceptible de fournir périodiquement à l'ordinateur des informations sous la forme d'images numériques du jet vu de profil sur une partie de sa longueur,

c. la caractéristique de projection mesurée sur les images est la luminance maximale $I_{max}$ du jet.

Une telle disposition permet de maîtriser efficacement le taux d'oxydes du revêtement, car il a été constaté que le taux d'oxydes du revêtement dépend fortement de l'intensité maximale $I_{max}$ du jet.

Avantageusement, l'ordinateur mesure et traite également la largeur L du jet, L constituant également une caractéristique de projection, un ordre de priorité étant défini dans le traitement des caractéristiques de projection, le traitement de la luminance maximale $I_{max}$ restant toutefois prioritaire, la caméra étant susceptible d'observer le jet avec une résolution au moins égale 0,5mmm, L étant proportionnel à écart type de la distribution de la luminance du jet suivant une ligne géométrique transversale au jet.

Une telle disposition permet de maîtriser également la dureté du revêtement car il a été constaté que cette dureté dépend fortement de la largeur L du jet.

Avantageusement encore, l'ordinateur mesure et traite également la position P du jet, P constituant également une caractéristique de projection, un ordre de priorité étant défini dans le traitement des caractéristiques de projection, le traitement de la luminance maximale $I_{max}$ restant le plus prioritaire, la caméra étant susceptible d'observer le jet avec une résolution au moins égale 0,5mm, P étant, à une valeur constante $P_0$ prés, la moyenne de la distribution de la luminance du jet suivant une ligne géométrique transversale au jet.

Une telle disposition permet de maîtriser également le taux de criques du revêtement car il a été constaté que ce taux de criques dépend fortement de la position P du jet.

Avantageusement encore :

d. les capteurs comportent également un pyromètre optique apte à mesurer à distance le rayonnement thermique à la surface d'une éventuelle pièce à revêtir positionnée devant la torche, le pyromètre ayant un champ étroit, le pyromètre étant positionné pour que le champ arrive au plus près du jet sur la pièce sans toutefois interférer avec ce jet, le pyromètre étant également apte à transmettre périodiquement à l'ordinateur la mesure de température par l'intermédiaire de la connexion capteurs - ordinateur;

e. l'ordinateur est apte à corriger la mesure de température en fonction du coefficient d'émissivité du revêtement, cette mesure T constituant alors également une caractéristique de projection, l'ordinateur étant apte à traiter les caractéristiques de projection avec un ordre de priorité, le traitement de la luminance maximale $I_{max}$ étant le plus prioritaire, le traitement de la température T arrivant en priorité seconde.

Une telle disposition permet afin d'étendre le domaine de fonctionnement normal de la torche. En effet, il a été constaté que le taux d'oxydes dépend également de la température du dépôt, mais à un moindre degré que l'intensité maximale $I_{max}$ du jet. Ainsi, lorsqu'il n'est plus possible de corriger $I_{max}$ sans faire sortir les paramètres d'alimentation de leurs plage de fonctionnement normal, la torche étant trop dégradée, l'instrument permet encore d'agir sur la température T du dépôt pour garantir le taux d'oxydes choisi.

La caméra sera avantageusement du type CCD, l'accumulation de charge dans les pixels de la matrice ayant pour effet de filtrer les vibrations hautes fréquences du jet et pour résultat d'améliorer l'estimation des caractéristiques du jet, et par répercussion de mieux maîtriser la projection thermique. Les mesures peuvent se faire simplement dans le spectre de lumière visible. Dans le cas d'applications nécessitant une grande maîtrise des procédés de fabrication, par exemple dans l'industrie aéronautique et spatiale, on prendra une caméra offrant des images du jet avec une résolution au moins égale à o,1mm afin de mieux maîtriser les caractéristiques de projection et par répercussion les caractéristiques des dépôts effectués.

La caméra, le pyromètre et les moyens informatiques utilisés sont répandus dans le commerce et bon marché, ce qui résout ainsi le second problème.

L'invention sera mieux comprise et les avantages qu'elle procure apparaîtrons plus clairement au vu de la description détaillée ci-après, de quelques exemples chiffrés de mise en oeuvre et des figures annexées.

## Description des figures

La figure 1 schématise une installation de projection thermique.

La figure 2 illustre une torche de projection thermique par arc plasma avec injection transversale du matériau en poudre à déposer, le jet étant vu suivant l'axe géométrique référencé 56 sur la figure 1.

La figure 3 illustre les capteurs embarqués avec la caméra CCD et le pyromètre optique.

La figure 4 illustre le pyromètre optique et son viseur.

La figure 5 apporte un exemple de schéma relationnel des informations de la base de données.

La figure 6 illustre les images traitées par l'ordinateur.

La figure 7 apporte un exemple synthétique d'algorithme pour assurer les fonctions de ordinateur.

## Description détaillée

On décrira en premier lieu une installation type de projection thermique et le dispositif de contrôle qui lui est associé selon l'invention.

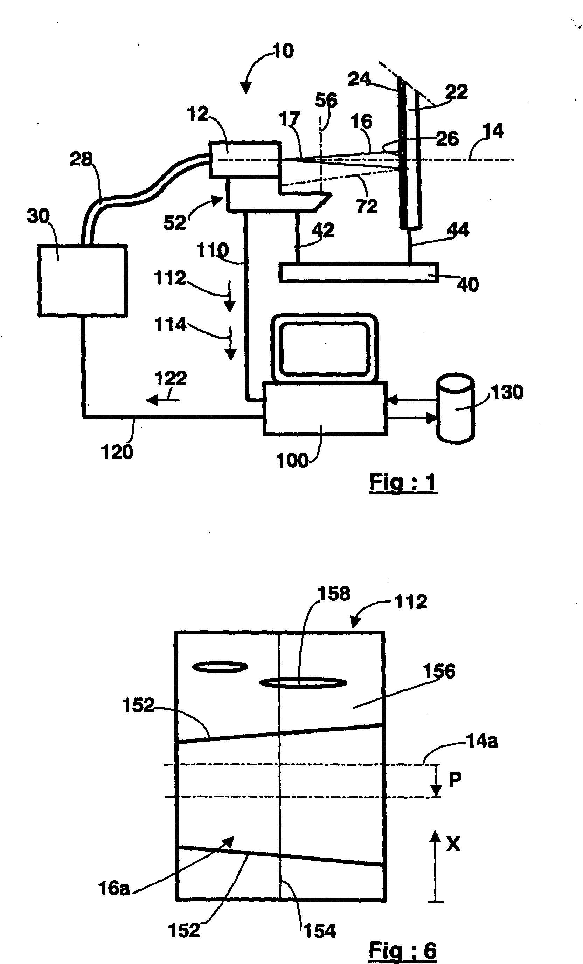

On se reportera d'abord à la figure 1. L'instrument de projection thermique 10 comporte une torche de projection thermique 12 d'axe géométrique 14 projetant selon cet axe géométrique 14 un jet 16 constitué par un flux de gaz chaud chargé de gouttelettes de la matière à projeter en fusion : métal, alliage métallique, céramique ou cermet. Le jet 16 est divergeant et a habituellement la forme d'un cône de révolution centré sur l'axe géométrique 14. Quelquefois, une flamme 17 très lumineuse émerge de la torche 12 dans la zone du sommet du cône formé par le jet 16. Dans le cas des torches plasma, cette flamme 17 peut atteindre une température de 8000°K. Au delà de cette flamme 17, le jet est également lumineux mais cette luminosité ne provient maintenant essentiellement que des gouttelettes de matière en fusion. Le jet 16 est normalement centré sur l'axe géométrique 14. A cause des hautes températures mises en oeuvre dans la torche 16 et malgré les dispositifs de refroidissement intégrés dans ces torches 16, les torches 16 se dégradent notamment par érosion pendant leur exploitation, ces dégradations pouvant modifier les caractéristiques du jet 16, déformer le jet 16 ou le faire dévier de l'axe géométrique 14.

On se reportera simultanément aux figures 1 et 2. La torche 12 est à arc plasma du type à injection transversale et comporte un injecteur 18 d'axe géométrique 20 perpendiculaire à l'axe géométrique de la torche 14, cet injecteur 18 injectant dans le jet 16 le matériau à projeter en poudre à l'aide d'un gaz dit porteur, cette injection se faisant juste à la sortie de la torche 12 dans la zone du sommet du cône formé par le jet 16, cette injection se faisant transversalement au jet 16 et provoquant une déviation du jet 16 dans la direction opposée à l'injecteur 18, le jet 16 s'écartant alors normalement de l'axe géométrique 14.

Les gouttelettes de matière en fusion projetées par le jet 16 arrivent à grande vitesse et s'écrasent sur la surface de la pièce 22 à recouvrir, afin d'y former par solidification et adhérence le dépôt 24 recherché. Ce dépôt 24 est constitué normalement par couches successives, la torche 12 balayant à plusieurs reprises la surface de la pièce 22. On référencera 26 la surface de la pièce 22 exposée à un instant donné au jet 16.

L'instrument de projection thermique 10 comporte également un conduit 28 et une armoire de commande 30, cette armoire de commande 30 alimentant en ingrédients la torche 12 par l'intermédiaire du conduit 28, cette alimentation consistant à apporter à la torche 12 les ingrédients requis pour son fonctionnement. On appellera "paramètres d'alimentation" les débits de ces ingrédients.

Dans le cas d'une torche à arc plasma, les paramètres essentiels d'alimentation de la torche sont :

- le courant d'arc électrique I et la tension V qui en résulte;
- le débit de chaque gaz plasmagène tels l'hydrogène H2 et l'argon Ar, exprimé par exemple en litres par minute, les litres étant considérés à la pression atmosphérique;
- le débit de matière Dm, exprimé par exemple en grammes par minute;
- le débit de gaz porteur, exprimé par exemple également en litres par minute, ce gaz étant habituellement de l'argon et étant noté $Ar_{porteur}$,

La torche 12 est refroidie par circulation d'eau.

La torche peut être tenue à la main, par exemple pour la réfection d'ouvrages d'art métalliques. Elle est le plus souvent utilisée sur une installation 40 de préférence robotisée assurant le maintien, le positionnement et le déplacement relatifs de la torche 12 et de la pièce 22 à traiter. L'installation 40 comportera avantageusement un bras robot 42 soutenant la torche 12 ainsi qu'un porte pièce 44 fixe ou pivotant et maintenant la pièce 22 devant la torche 12.

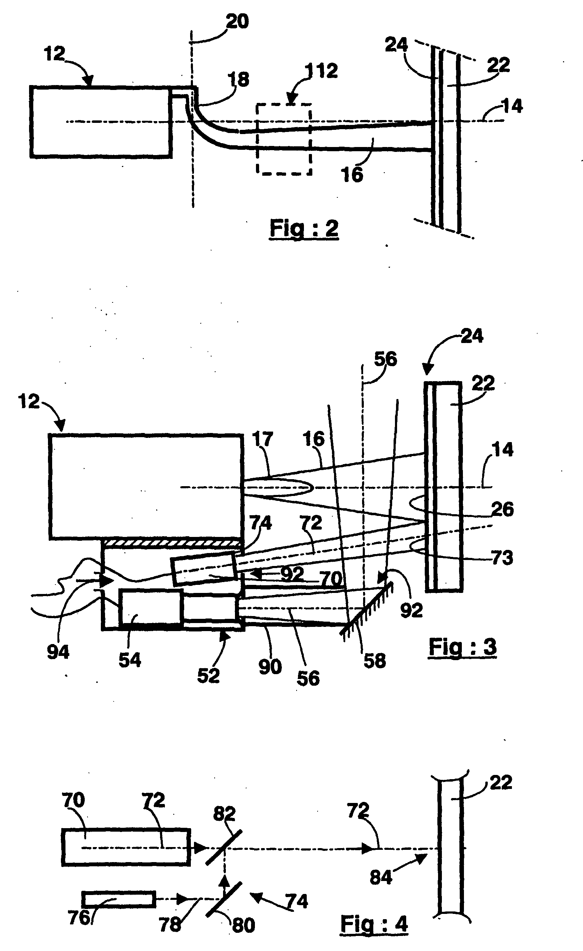

On se reportera maintenant à la figure 3. Selon l'invention, l'instrument de projection 10 comporte des capteurs embarqués 52 attachés à la torche 12 de façon à la suivre dans ses mouvements pendant la projection thermique, ces capteurs embarqués 52 restant ainsi dans une position relative constante par rapport à la torche 12.

Les capteurs embarqués 52 sont constitués d'abord par une caméra CCD 54 susceptible de fournir des images numériques du jet 16 prises transversalement voire perpendiculairement à ce jet 16. Lorsque le jet 16 présente à son début une flamme 17, la caméra 54 est positionnée pour fournir une image du jet 16 au delà de la flamme 17, c'est à dire en aval de cette flamme 17, afin que l'image du jet 16 ne soit pas voilée par la lumière de la flamme 17. On référencera 56 l'axe géométrique de prise de vue de la caméra 54. De préférence mais non obligatoirement, la caméra 54 est disposée sur le coté de la torche 12 et vise le jet 16 par l'intermédiaire d'un miroir de prise de vue 58 disposé à 45° devant la caméra 54, ce miroir de prise de vue 58 déviant à 90° l'axe géométrique de la caméra CCD 56 et permettant à cette caméra CCD 54 de voir le jet 16. Une telle disposition permet ainsi de dégager le plus possible l'espace entre la torche 12 et la pièce 22.

La caméra doit avoir une résolution suffisante pour percevoir des détails de 0,5mm sur le jet 16. Cette résolution est en effet nécessaire pour détecter et mesurer une déviation du jet de 0,5mm. Dans le cas des applications aéronautiques, cette résolution devrait même être au moins égale à 0,1mm afin de maîtriser les caractéristiques du dépôt avec une précision suffisante. Dans cet exemple, la caméra a une matrice CCD (Charge Coupled Device) de 640 x 480 pixels avec une durée d'exposition allant de 1/30 seconde à 1/2000 seconde pour observer des jets d'intensité lumineuse très différentes avec une précision suffisante et sans saturation des pixels de la matrice. La sensibilité de la caméra CCD peut être limitée au spectre visible. Une caméra noir et blanc est suffisante mais on peut également utiliser une caméra couleur. Une telle caméra est couramment commercialisés à faibles coût. Il suffit qu'elle présente une résistance suffisante à la chaleur dégagée lors de la projection thermique.

Dans le cas où la torche 12 comportant un injecteur 18 de matière à projeter en poudre, la caméra 54 est positionnée pour voir le jet 16 suivant un axe géométrique 56 sensiblement orthogonal à l'axe géométrique 20 de l'injecteur 18, cette position permettant de visualiser au mieux la déviation du jet 16 provoquée par ce mode d'injection, cette position permettant en conséquence de contrôler plus efficacement la déviation du jet 16.

Par rapport à des dispositifs d'acquisition classiques tels une barrette de photodiodes, la caméra CCD présente les avantages suivants.

- Lissage des vibrations haute fréquence du jet obtenu par l'effet d'accumulation des charges dans les pixels de la matrice CCD, cette accumulation s'effectuant en proportion de la lumière qu'ils reçoivent, ce lissage évitant de fausser les mesures et d'introduire des instabilités dans le pilotage de la torche. En effet, les capteurs intègrent la lumière reçue pendant la durée de l'exposition, de sorte que les variations de la luminance du jet 16 provenant de ces vibrations sont divisées par le rapport d/t, d étant la durée de l'exposition et t étant la période des vibrations du jet. Dans un dispositif classique, il aurait fallu disposer des filtres électroniques passe-bas sur chacun des éléments photosensibles ce qui en augmenterait l'encombrement et en limiterait le nombre.

- Grande résolution sous un faible volume, soit quelques centimètres cubes.
- Dispositif bon marché et permettant de prendre et de transmettre les images à l'ordinateur par des moyens standards et couramment commercialisés.

Les capteurs embarqués 52 sont constitués également par un pyromètre optique 70 d'axe géométrique 72 et mesurant à distance le rayonnement thermique émis par une surface 73 dite "de mesure", la surface 73 de mesure étant de petites dimensions sur l'axe géométrique 72. Le pyromètre 70 est directif et il est susceptible d'être pointé sur la pièce 22 au plus prés de la zone de projection 26 mais sans toutefois interférer avec cette zone de projection 26, c'est à dire que la zone de mesure 73 est proche voire adjacente à la zone de projection 26 mais n'interfère pas avec cette zone de projection 26. En d'autres termes, le pyromètre 70 a un champ étroit et il est positionné pour que le champ arrive au plus prés du jet 16 sur la pièce 22 sans toutefois interférer avec ce jet 16. Avec cette disposition, le jet 16 très lumineux reste extérieur au champ du pyromètre et en particulier de la zone de mesure 73 de sorte que le pyromètre 70 reçoit le rayonnement thermique du dépôt 24 mais pas le rayonnement lumineux du jet 16 qui serait susceptible de fausser la mesure de la température du dépôt. Pour faciliter le positionnement du pyromètre 70, celui-ci comporte avantageusement un viseur 74 à laser projetant une tache lumineuse sur la zone de mesure 73.

La mesure du rayonnement thermique est faite habituellement dans l'infrarouge, c'est à dire dans la bande de radiations électromagnétiques allant de $0,8\mu m$ à $14\mu m$. Dans le cas particulier des torches à arc plasma cette mesure sera avantageusement faite dans la bande $8\mu m$ - $14\mu m$ afin d'avoir une mesure stable, précise et à moindre coût. En effet, avec ce type de torche, il a été constaté qu'il se produit au voisinage du jet 16 une ionisation de la vapeur d'eau $H_2O$ et du gaz carbonique $CO_2$ contenus dans l'air, cette ionisation provoquant une absorption du rayonnement infrarouge dans les bandes $0,8\mu m$ - $3,46\mu m$ et $4,78\mu m$ - $8\mu m$ pour la vapeur d'eau et dans la bande $4,2\mu m$ à $4,5\mu m$ pour le gaz carbonique. Il a été constaté que des mesures de température effectuées sans exclure ces bandes d'absorption sont instables et affectées de bruits de fond qui les rendent difficilement exploitables. Il est donc préférable d'effectuer la mesure dans la bande $8\mu m$ - $14\mu m$, cette bande étant suffisamment large pour que l'on puisse équiper le pyromètre 70 d'un filtre peu coûteux. Il est également possible d'effectuer cette mesure dans les bandes $3,46\mu m$ - $4,2\mu m$ ou $4,5\mu m$-$4,78\mu m$, mais celles-ci sont étroites et il est alors nécessaire d'équiper le pyromètre 70 de filtres à bande étroite performants et donc coûteux.

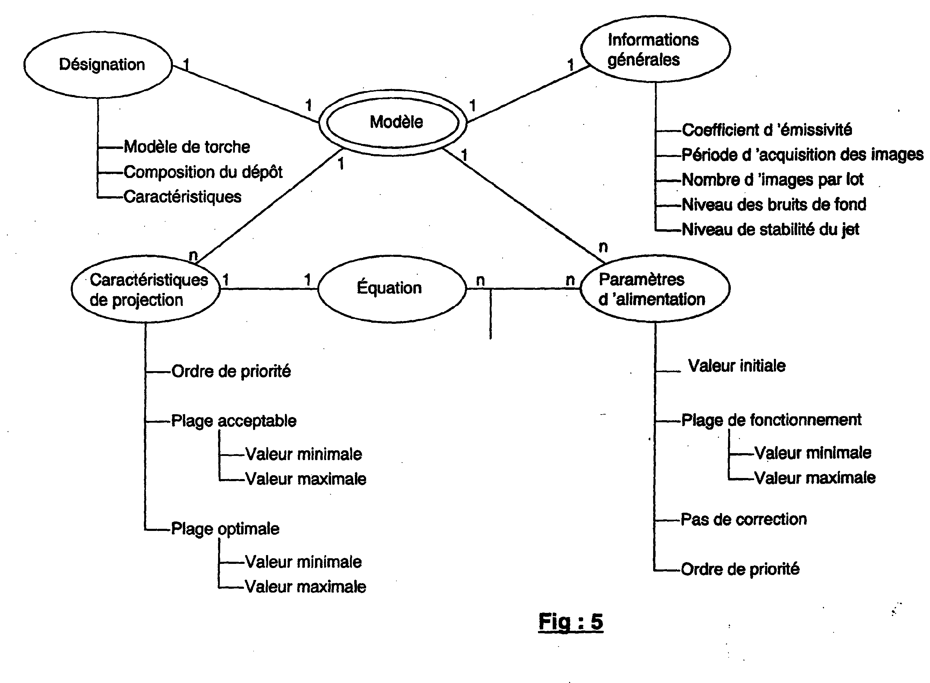

Un exemple de viseur 74 est illustré à la figure 4. Le viseur 74 projeté un faisceau laser étroit 78 dans l'axe géométrique 72 du pyromètre 70. Pour cela, le viseur comporte une diode laser 76 disposée sur le coté du pyromètre 70, la diode laser 76 émettant un rayon laser 78 à l'avant du pyromètre 70 parallèlement à son axe géométrique 72, le rayon laser 78 étant ramené dans l'axe géométrique du pyromètre 72 par un jeu classique de deux miroirs 80 et 82, le second miroir 82 étant semi-réfléchissant et positionné sur l'axe géométrique du pyromètre 72. Avec une telle disposition, le réglage du viseur ne dépend pas de la distance entre le pyromètre 70 et la surface de la pièce dont il faut mesurer la température.

On notera que le pyromètre 70 ne donne une mesure exacte de la température que pour les corps noirs parfaits. Dans la réalité, il faut tenir compte du coefficient d'émissivité E de la matière dont on mesure la température, ce coefficient d'émissivité E étant compris entre 0 et 1, la température réelle T étant liée à la température observée par le pyromètre $T_{obs}$ par la relation suivante :

$$T \cong C / \lambda [ \ln(E) + C / \lambda . T_{obs} ] -273 \quad avec \; C = 0,00144$$

$T_{obs}$ étant la température absolue exprimées en degrés Kelvin et T étant par commodité exprimée en degrés Celcius. La température mesurée peut être ainsi calculée par des moyens analogiques ou numériques.

On se reportera de nouveau à la figure 3. Les capteurs embarqués 52 sont disposés à l'intérieur d'une enceinte fermée 90 qui les protège contre les agents extérieurs, cette enceinte 90 comportant cependant des ouvertures 92 permettant à la caméra 54 de voir le jet 16 et au pyromètre 70 de voir la surface de la pièce 22, cette enceinte 90 comportant une alimentation en air sous pression 94, cet air sous pression ressortant par les ouvertures 92 et faisant obstacle à la pénétration de poussières et de gouttelettes dans l'enceinte pendant le fonctionnement de la torche 12, ces poussières et gouttelettes étant susceptibles de se déposer sur les capteurs 52 et notamment d'en encrasser les composants optiques.

On se reportera de nouveau à la figure 1. L'instrument de projection thermique 10 comporte également un ordinateur 100 connecté par la connexion 110 aux capteurs embarqués 52, soit à la caméra 54 et au pyromètre 70. Par cette connexion 110, l'ordinateur 100 est susceptible de recevoir en temps réel les images 112 numériques en provenance de la caméra 54 ainsi que les relevés de température 114 en provenance du pyromètre 70. L'ordinateur 100 est également connecté par la connexion 120 à l'armoire de commande 30. Par cette connexion 120, l'ordinateur 100 est susceptible de transmettre en temps réel les paramètres d'alimentation à l'armoire de commande 30 Par cette connexion 120 également, l'ordinateur est susceptible de recevoir en temps réel des paramètres d'alimentation de l'armoire de commande 30, par exemple la tension V de l'arc dans le cas d'une torche plasma. Par le terme "temps réel", il faut entendre la valeur de l'information à appliquer dès sa réception ou la valeur en cours de l'information qui va être transmise. L'ordinateur 100 peut être un micro-ordinateur couramment commercialisé équipé des moyens de connexion approprié pour pouvoir être raccordé aux connexions 110 et 120 respectivement aux capteurs 52 et à l'armoire de commande 30, cet ordinateur 100 devant également avoir une puissance suffisante pour pouvoir effectuer les traitements à la fréquence appropriée.

On se reportera maintenant à la figuré 5. L'ordinateur 100 comporte également une base de donnée 130 contenant les informations nécessaires au contrôle et au pilotage de la projection thermique. Dans cet exemple, les informations sont regroupées en modèles, chaque modèle apportant les informations requises pour piloter une opération de dépôt par projection thermique avec une torche, une composition de dépôt et des caractéristiques de dépôt spécifiées.

Le modèle comporte d'abord les informations le désignant, soit :

- le modèle de torche utilisé;
- la composition du dépôt à effectuer;
- les caractéristiques du dépôt à obtenir;

ces informations permettant de le désigner sans ambiguïté et de choisir le modèle approprié dans une base de données, par exemple par une simple recherche multicritères.

Le modèle comporte des informations générales :

- coefficient d'émissivité pour calculer la température exacte à partir de la mesure donnée par le pyromètre;
- période d'acquisition des images de la caméra CCD;
- Nombre d'images par lot;
- Niveau du bruit de fond;
- Niveau seuil de stabilité du jet.

Un modèle comporte les caractéristiques de projection à prendre en compte et dont il faut assurer le pilotage, soit :

- $I_{max}$ : luminosité maximale du jet;
- L : largeur du jet;
- P : position du jet;
- T : température du dépôt.

Pour chacune de ces caractéristiques de projection, le modèle comporte également :

- un ordre de priorité;
- une plage dite "acceptable" définie par une valeur minimale et une valeur maximale;
- et une plage dite "optimale" définie également par une valeur minimale et une valeur maximale, la plage optimale étant bien évidemment incluse dans la plage acceptable de la caractéristique de projection correspondante.

Le modèle comporte les paramètres d'alimentation sur lesquels il faut agir pour piloter les caractéristiques de projection. Ces paramètres varient évidemment avec le modèle de torche utilisée. Par exemple, dans le cas d'une torche plasma :

- I : Intensité d'arc;
- Ar : débit d'argon plasmagène;
- $H_2$ : débit d'hydrogène plasmagène;
- $Ar_{porteu}$r: débit d'argon porteur.
  Le modèle comporte pour chaque paramètre d'alimentation :

- une valeur initiale à transmettre à l'armoire de commande au démarrage d'une opération de projection thermique;
- un ordre de priorité par par défaut s'appliquant uniformément à ce paramètre d'alimentation pour toutes les caractéristiques de projection sur lesquelles il a une influence.

- une plage de fonctionnement normal de la torche, exprimée par une valeur minimale et une valeur maximale, cette plage pouvant également exprimer les limites de validité de l'équation,
- un pas de correction,

A noter que dans certains cas plus complexes, l'ordre de priorité et la plage de fonctionnement normal doit être précisés pour chaque équation dans lequel intervient le paramètre d'alimentation considéré.

Le modèle donne enfin, les relations statistiques entre les caractéristiques de projection et les paramètres d'alimentation de la torche sous la forme d'un système d'équations dont chaque équation est un polynôme de la forme :

$$\text{caractéristique de projection} = F(\text{paramètre d'alimentation})$$

$$= K + \Sigma_i c_i p_i + \Sigma_{jk} c_{jk} p_j p_k$$

dans laquelle :

- K est une constante positive ou négative;
- $C_i$ est un coefficient positif ou négatif associé au paramètre d'alimentation i;
- $p_i$ est la valeur courante du paramètre d'alimentation i;
- $q_{jk}$ est un coefficient positif ou négatif associé au produit de deux paramètres d'alimentation j et k.

En pratique, chaque polynôme est linéaire et parfois de degré 2. Des degrés supérieurs sont envisageables mais l'estimation des relations et du degré de dépendance entre les caractéristiques de projection et les paramètres d'alimentation deviennent délicats.

Ces relations sont évidemment statistiques et établies par ailleurs par des recherches en laboratoire. Elles sont valables, avec une dispersion acceptable, seulement à l'intérieur d'une plage de valeur spécifiées de chaque paramètre d'alimentation. Ainsi, la plage dite "de fonctionnement normal" peut correspondre :

- soit à des limitations de la torche;
- soit à des limitation de la validité de l'équation correspondant à un degré de dépendance jugé acceptable entre la caractéristique de projection concernée et les paramètres d'alimentation dont elle dépend.

Avantageusement.

- L'ordre des équations donne l'ordre de priorité dans lequel les caractéristiques de projection doivent être corrigées.
- L'ordre des paramètres d'alimentation dans chaque équation donne l'ordre de priorité

dans lequel il faut modifier les paramètres d'alimentation pour corriger la caractéristique de projection correspondante.

Nous allons maintenant définir plus précisément les caractéristiques de projection et on se reportera simultanément aux figures 1 et 5.

L'intensité lumineuse maximale du jet $I_{max}$ est la luminance maximale du jet 16, cette luminance maximale du jet étant habituellement au centre du jet 16 vu latéralement de l'extérieur et en aval d'une éventuelle flamme 17 sortant de la torche 12. La luminance est une grandeur physique exprimable en watts par mètre carré et par stéradian (w / m$^2$ / sr). Avantageusement, on prendra le niveau lumineux maximal des pixels de l'image de points 112 donnée par la matrice de la caméra CCD 54. Ce niveau lumineux est commun aux standards d'images connus tels le bitmap, le GIF, le PSD, etc. Il est habituellement codé sur huit bits et s'échelonne par conséquent de zéro à 255. Si la caméra CCD 54 utilisée fourni des images en couleur, c'est à dire en trichromie additive rouge - vert - bleu, on pourra prendre simplement, mais ce n'est pas obligatoire, le niveau lumineux maximal de la couleur verte, cette couleur verte se rapprochant le plus du comportement d'une caméra CCD en noir et blanc.

La largeur du jet L est une grandeur choisie pour caractériser la largeur du jet 16. Comme les bords du jet 16 sont flous et imprécis, on prendra avantageusement une grandeur proportionnelle à l'écart type σ de la distribution de la luminance du jet dans le sens de la largeur du jet. En pratique, on prendra l'écart type σ de la distribution du niveau lumineux des pixels sur l'image du jet 112 dans le sens de la largeur du jet 16a sur cette image 112, par exemple le long d'une ligne de pixels 154 perpendiculaire à la position 14a sur l'image 112 de l'axe géométrique de la torche 14. On prendra par exemple L = 2σ exprimé en millimètres.

La position du jet P est la position du jet par rapport à l'axe géométrique 14 de la torche 12. Comme les bords du jet sont flous et imprécis, P sera avantageusement la moyenne de la distribution de la luminance du jet également dans le sens de la largeur du jet 16a sur l'image 112, par exemple et comme précédemment le long d'une ligne de pixels 154 perpendiculaire à la position 14a sur l'image 112 de l'axe géométrique de la torche 14.

Il a été constaté que la distribution des niveaux lumineux des pixels dans le sens de la largeur du jet 16a sur son image 112 suivait approximativement la loi de Gauss bien connue sous la forme :

$$I = G(I_{max}, P, \sigma) = I_{max}.exp(-(x-(P+P_0))^2/\sigma^2)/2\pi, \text{ avec :}$$

I = niveau lumineux des pixels dans le sens de la largeur du jet;

x = position du pixel;

$P_0$ = position 14a de l'axe géométrique 14 sur l'image 112, cette position 14a étant facilement repérée en emboîtant une tige dans la buse de la torche 12 et en prenant une image 112 de cette tige.

Il est en conséquence avantageux d'exploiter cette information supplémentaire et de déduire Imax, P et σ de l'estimation de la loi de Gauss G de la distribution des niveaux lumineux des pixels comme précédemment dans le sens de la largeur du jet 16a sur l'image 112, par exemple et comme précédemment le long d'une ligne de pixels 154 perpendiculaire à la position 14a sur l'image 112 de l'axe géométrique de la torche 14, cette estimation pouvant par exemple être faite par la méthode bien connue dite "des moindres carrés".

Afin de réduire l'influence des lumières parasites et reflets lumineux en tous genres autour de l'installation de projection thermique, ces lumières parasites étant susceptibles de provoquer sur les images 112 un voile 156 diffus de part et d'autres de l'image du jet 16a ainsi que des taches claires 158 provenant de reflets, ce voile et ces taches claires 156 étant susceptibles de fausser de façon non répétitive les estimation des caractéristiques du jet, on ne prendra avantageusement en compte que les pixels dont le niveau lumineux est supérieur à une valeur seuil appelée "niveau du bruit de fond". Cette valeur seuil est facilement déterminée par une analyse séparée de quelques images tests. En pratique, elle est égale à 4 ou 5 sur l'échelle des niveaux lumineux s'étendant de 0 à 255 sur les images 112.

La température du dépôt T est la température mesurée par le pyromètre 70 et corrigée en fonction de l'émissivité du dépôt.

La caméra CCD doit avoir une résolution suffisante pour mesurer la largeur du jet L et sa position P avec une fidélité de 0,5mm dans les applications courantes et 0,1mm dans les applications aéronautiques. Cela signifie que les mesures doivent être répétitives et qu'elles peuvent détecter des écarts respectivement de 0,5mm et de 0,1mm dans les variations des grandeurs mesurées. La caméra utilisée ici a une matrice de 640x480 pixels.

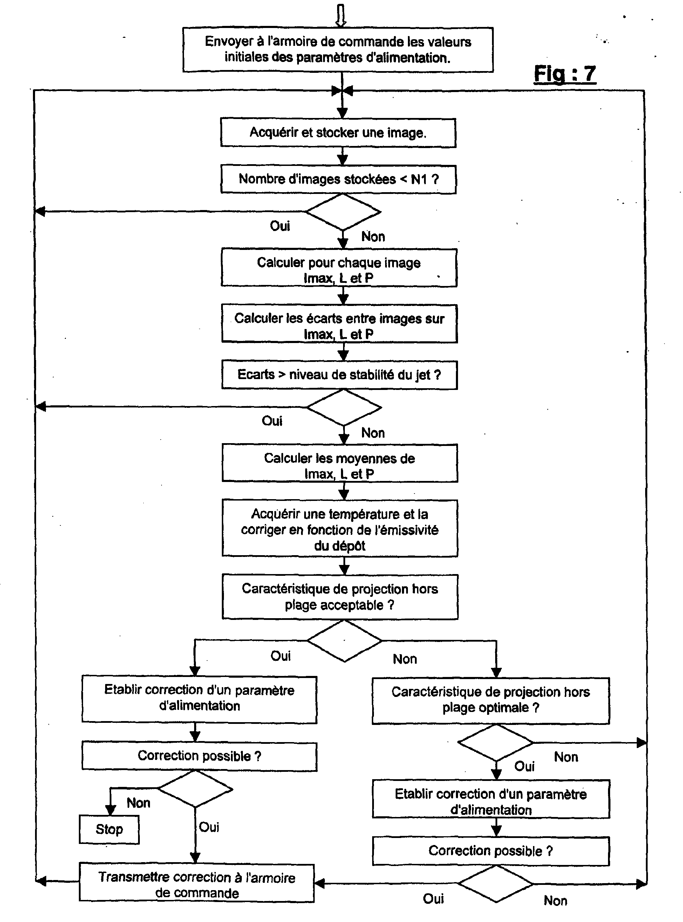

On se reportera simultanément aux figures 1 et 6. L'ordinateur 100 est équipé d'un logiciel de contrôle accédant à la base de données 130 pour assurer les fonctions suivantes :

- Donner à l'armoire de commande les valeurs initiales des paramètres d'alimentation au démarrage d'une opération de dépôt.
- Acquérir N fois par seconde des images 112 provenant de la caméra CCD et les regrouper en lots de N1 images, et acquérir à la fin de chaque lot d'images une mesure de la température 114 issue du pyromètre.
- Pour chaque image, calculer les caractéristiques du jet utilisées à partir de pixels de l'image sélectionnés sur une ligne de pixels 154 transversale à l'image du jet 16a et dont le niveau lumineux ni est supérieur à celui du bruit de fond.

  - Si on appelle x le rang des pixels le long de la ligne de pixels 154, $P_0$ la position 14a sur l'image 112 de l'axe géométrique de la torche 14, ni le niveau lumineux des pixels et n le nombre de pixels, Imax, L et P peuvent être calculés par les formules suivantes :

    - Imax = maximum (nl)
    - P = moyenne de x = $\Sigma$ x.nl/$\Sigma$nl -$P_0$
    - L = 2 x écart type = $2\sigma$ = 2.racine carrée $[\Sigma(x.nl)^2/n-(P+P_0)^2]$

  - Imax, P et L seront de préférence déduit d'une loi de Gauss établie, par exemple, par la méthode bien connue dite "des moindres carrés" à partir de la distribution du niveau lumineux nl des pixels le long de la ligne de pixels, cette loi de Gauss étant de la forme : $I_{max}.exp(-(x-(P+P_0))^2/\sigma^2)/2\pi$

Il s'agit là d'une forme de mise en oeuvre préférée dans laquelle la position P du jet est estimée par rapport à une position de référence $P_0$ correspondant à l'axe géométrique de la torche 12. On comprend que toute autre estimation de P calculée à une valeur constante près donnera le même résultat. Il suffira de changer le terme constant dans l'équation donnant la caractéristique de projection P en fonction des paramètres d'alimentation ayant une influence sur P.

Par commodité de langage, on appellera "traitement" l'exploitation les caractéristiques de projection dans le but de calculer et de transmettre à l'armoire de commande de nouveaux paramètres d'alimentation. Dans ce cadre, l'ordinateur 100 assure les fonctions suivantes.

- Pour chaque lot : vérifier que le jet 16 est stabilisé en vérifiant que les écarts des caractéristiques du jet entre les images du lot sont au plus égal au niveau seuil de stabilité du jet.
- Pour chaque lot d'image se rapportant à un jet 16 réputé stabilisé :

  - Calculer les caractéristiques de projection en moyennant les mesures de Imax, L, P et en corrigeant la température T en fonction de l'émissivité de la surface mesurée.
  - Rechercher la caractéristique de projection la plus importante ayant dérivé en dehors de sa plage acceptable prédéfinie, et déterminer et transmettre à l'armoire de commande 30 le paramètre d'alimentation à corriger ainsi que sa nouvelle valeur, lesquels sont appropriés pour ramener la caractéristique de projection vers sa plage acceptable.
  - Emettre un signal d'alarme et transmettre à l'armoire de commande un ordre d'arrêt lorsqu'il n'est pas possible de ramener une caractéristique de projection vers sa plage acceptable sans faire sortir tous les paramètre d'alimentation de leurs plages de fonctionnement normales prédéfinies.
  - Lorsque toutes les caractéristiques de projection sont chacune dans leur plage acceptable : rechercher la caractéristique de projection la plus importante située en dehors de sa plage optimale prédéfinie, et déterminer et transmettre à l'armoire de commande le paramètre d'alimentation à corriger ainsi que sa nouvelle valeur, lesquels sont appropriés pour amener ce paramètre de projection vers sa plage optimale. Par mesure de simplicité, et bien que ce ne soit pas obligatoire, les caractéristiques de projection seront traitées avec les mêmes ordres de priorité.

La figure 6 fournit sous une forme synthétique un exemple d'algorithme permettant d'assurer ces fonctions. Il est synthétique car il ne donne que la logique générale du contrôle et du pilotage du fonctionnement de la torche, car relèvent d'une programmation évidente : soit l'estimation des caractéristiques de projection, le choix des caractéristiques de projection et des paramètres d'alimentation correspondants à corriger ainsi que le calcul de cette correction.

Nous allons maintenant examiner quelques exemples chiffrés de mise en oeuvre de la présente invention. La torche employée est une torche de projection thermique à plasma à injection externe et plus précisément le modèle F4MB commercialisé par la société Suisse dont la raison sociale est Sulzer Metco. Dans ces exemples, la torche est utilisée dans des plages de fonctionnement sensiblement communes de sorte que les mêmes équations peuvent être utilisées.

Les informations générales sont les suivantes :

- Fréquence d'acquisition des images = N = 100 / seconde
- Nombre d'images par lot = N1 = 10
- Niveau du bruit de fond = 5
- Niveau de stabilité du jet = 1%

A noter que dans l'installation réalisée par les inventeurs, les images et les mesures de température sont directement disponibles sur les ports de l'ordinateur

Les valeurs des caractéristiques de projection $I_{max}$, P, L et T sont données par les équations suivantes :

$$Imax = -45,2957 - 1,51175 \cdot Ar + 38,2083 \cdot H_2 + 0,234739 \cdot I - 8,94 \cdot Ar_{porteur} - 0,39724 \cdot ArH_2 - 0,00272557 \cdot Ar \cdot I + 1,04463 \cdot Ar \cdot Ar_{porteur} + 0,0170028 \cdot H_2 \cdot I - 6,46563 \cdot H_2 \cdot Ar_{porteur} - 0,0231932 \cdot I \cdot Ar_{porteur}$$

$$P = -7,85889 + 0,0795898 \cdot Ar - 0,0244141 \cdot H_2 + 0,00776811 \cdot I + 2,22168 \cdot Ar_{porteur} - 0,000712077 \cdot ArH_2 - 0,0000521573 \cdot Ar \cdot I - 0,0266113 \cdot Ar \cdot Ar_{porteur} - 0,000616599 \cdot H_2 \cdot I + 0,10376 \cdot H2 \cdot Ar_{porteur} - 0,000998757 \cdot I \cdot Ar_{porteur}$$

$$L = 17.9632 - 0{,}30375*Ar - 0{,}377083*H_2 - 0{,}00725*I - 0{,}025*Ar_{porteur} + 0{,}0107292*Ar*H_2$$
$$+0{,}000126136*Ar*I + 0{,}04675*Ar*Ar_{porteur} - 0{,}0000473485*H_2*I + 0{,}0395833*H_2*Ar_{porteur}$$
$$+0{,}00206818*I*Ar_{porteur}$$

$$T = -417{,}125 + 3{,}7875*Ar + 61.5625*H_2 + 0{,}729545*I + 51.25*Ar_{porteur} - 0{,}380208*Ar*H_2$$
$$-0{,}00244318*Ar*I - 0{,}0625*Ar*Ar_{porteur} - 0{,}0260417*H_2*I - 6{,}77083*H_2*Ar_{porteur} -$$
$$0{,}0352273*I*Ar_{porteur}$$

Dans ces équations :

- I est exprimé en Ampères.
- Les débits de gaz Ar, $Ar_{porteur}$ et H2 sont exprimés en litres par minutes ramenés à la pression atmosphérique.
- Les paramètres d'alimentation ont les mêmes ordres de priorité dans chaque équation et sont ainsi pris dans l'ordre de priorité décroissante suivant : Ar, H2, I, $Ar_{porteur}$. Cette identité des ordres de priorité est lié seulement à cette torche et n'a pas valeur de règle générale.

En pratique, le fonctionnement de la torche n'est limité que par la puissance maximale dissipée, soit 55kw. Si l'on adopte une marge de sécurité de 10kw, la torche ne sera pas utilisée au delà de 45kw et l'intensité d'arc I sera conditionné par la formule suivante :

$$I \leq 45000/V$$

V étant la tension de l'arc plasma exprimée en volts et donnée à l'ordinateur 100 par l'armoire de commande 30 via la connexion 120 entre l'armoire de commande 30 et l'ordinateur 100.
L'intensité d'arc minimale ainsi que les plages de fonctionnement normale des autres paramètres d'alimentation, soit Ar, $H_2$ et $Ar_{porteur}$ correspondent aux domaines dans lesquels ces équations sont valables .
Ainsi par exemple :

- Si Imax doit être réduit, on augmentera Ar d'une valeur égale à son pas puisque le coefficient de Ar dans cette équation est négatif et égal à -1,51175. Inversement, si Imax doit être augmenté, on réduira au contraire Ar d'une valeur égale à son pas.
- Si Ar arrive hors sa plage de fonctionnement normal et que Imax doit être réduit, on réduira alors H2 d'une valeur égale à son pas puisque le coefficient de H2 dans cette équation est positif et égal à +38,2083. Inversement, si Imax doit être augmenté, on augmentera H2 d'une valeur égale à son pas.

Dans un premier exemple chiffré, le dépôt est du CuNiln (cuivre, nickel et Indium) et il doit avoir un taux d'oxyde au plus égal à 2%. Des observations ont montré que le taux d'oxydes exprimé en pourcentage, soit une valeur allant de 0% à 100%, est donné par la formule suivante :

$$\text{Taux d'oxyde} = 0{,}0163213*I_{max} + 0{,}00778653*T$$

la variable $I_{max}$ étant prioritaire sur la variable T, le modèle correspondant à ce dépôt comportant donc les équations précitées donnant Imax et T.
Les plages optimales et les plages acceptables, exprimées chacune par une valeur minimale et une valeur maximale, de Imax et de T sont les suivantes :

| Caractéristiques de projection | Ordre de priorité | Plages acceptables mini / maxi | Plages optimales mini /maxi |
|---|---|---|---|
| $I_{max}$[0, 255] | 1 | 0/40 | 0/20 |
| T (°C) | 2 | 190/280 | 190/220 |

Les valeurs initiales des paramètres d'alimentation et les plages de fonctionnement normal exprimées en terme de valeur minimale / maximale sont données par le tableau suivant :

| Paramètres d'alimentation | Valeurs initiales | Plages de fonctionnement maxi / mini | Pas de correction |
|---|---|---|---|
| I(A) | 450 | 360/540 | $\pm 10$ |
| Ar (L/mn) | 45 | 36/54 | $\pm 1$ |
| H2 (Umn) | 15 | 12/ 18 | $\pm 0,5$ |
| $Ar_{porteur}$ (Umn) | 2,5 | 2/3 | $\pm 0,1$ |

Dans un second exemple chiffré, le dépôt doit avoir une dureté au moins égale à 120Hv, ce dépôt étant effectué avec la torche et la composition du dépôt précitées. Les expérimentations ont montré que la dureté exprimée en Hv est donnée par la formule suivante :

$$\text{Dureté} = 8,4*L + 5,2*I_{max}$$

La variable L étant le plus influente, l'opérateur utilisera en conséquence le système d'équation suivant dans lequel L est prioritaire sur $I_{max}$ :

$$L = 17.9632 - 0,30375*Ar - 0,377083*H_2 - 0,00725*I - 0,025*Ar_{porteur} + 0,0107292*Ar*H_2 + 0,000126136*Ar*I + 0,04675*Ar*Ar_{porteur} - 0,0000473485*H_2*I + 0,0395833*H_2*Ar_{porteur} + 0,00206818*I*Ar_{porteur}$$

$$I_{max} = -45,2957 - 1,51175*Ar + 38,2083*H_2 + 0,234739*I - 8,94*Ar_{porteur} - 0,39724*ArH_2 - 0,00272557*Ar*I + 1,04463*Ar*Ar_{porteur} + 0,0170028*H_2*I - 6,46563*H_2*Ar_{porteur} - 0,0231932*I*Ar_{porteur}$$

Les plages optimales et les plages acceptables, exprimées en termes de valeurs mini / maxi, de L et de $I_{max}$ sont les suivantes :

| Caractéristiques de projection | Ordre de priorité | Plages acceptables mini / maxi | Plages optimales mini / maxi |
|---|---|---|---|
| L (mm) | 1 | 2/9,8 | 2/5 |
| $I_{max}$ [0,255] | 2 | 20/180 | 20/100 |

Les valeurs initiales des paramètres d'alimentation et les plages de fonctionnement normal exprimées en terme de valeur mini / maxi sont donnés par le tableau suivant :

| Paramètres d'alimentation | Valeurs initiales | Plages de fonctionnement mini / maxi | Pas de correction |
|---|---|---|---|
| I(A) | 450 | 360 / 540 | $\pm 10$ |

Suite de tableau

| Paramètres d'alimentation | Valeurs initiales | Plages de fonctionnement mini / maxi | Pas de correction |
|---|---|---|---|
| Ar (Umn) | 45 | 36/54 | $\pm 1$ |
| H2 (Umn) | 15 | 12/18 | $\pm 0,5$ |
| $Ar_{porteur}$ (L/mn) | 2,5 | 2/3 | $\pm 0,1$ |

Ce troisième exemple chiffré combine les deux exemples précédents, le dépôt devant avoir un taux d'oxydes au plus égal à 2% et une dureté au moins égale à 120Hv, ce dépôt étant effectué avec la torche et la composition du dépôt précitées. Les expérimentations ont montré que le taux d'oxydes exprimé en pourcentage, soit de 0% à 100%, et la dureté exprimée en Hv sont donnés par la formule suivante :

$$\text{Taux d'oxydes} = 0{,}0163213*Imax + 0{,}00778653*T$$

$$\text{Dureté} = 8{,}4*L + 5{,}2*T$$

L'opérateur utilise ici le système d'équations suivant dans lequel Imax est prioritaire sur L et L est prioritaire sur T :

$$I_{max} = -45{,}2957 - 1{,}51175*Ar + 38{,}2083*H_2 + 0{,}234739*I - 8{,}94*Ar_{porteur} - 0{,}39724*ArH_2 - 0{,}00272557*Ar*I + 1{,}04463*Ar*Ar_{porteur} + 0{,}0170028*H_2*I - 6{,}46563*H_2*Ar_{porteur} - 0{,}0231932*I*Ar_{porteur}$$

$$L = 17.9632 - 0{,}30375*Ar - 0{,}377083*H_2 - 0{,}00725*I - 0{,}025*Ar_{porteur} + 0{,}0107292*Ar*H_2 + 0{,}000126136*Ar*I + 0{,}04675*Ar*Ar_{porteur} - 0{,}0000473485*H_2*I + 0{,}0395833*H_2*Ar_{porteur} + 0{,}00206818*I*Ar_{porteur}$$

$$T = -417{,}125 + 3{,}7875*Ar + 61.5625*H_2 + 0{,}729545*I + 51.25*Ar_{porteur} - 0{,}380208*Ar*H_2 - 0{,}00244318*Ar*I - 0{,}0625*Ar*Ar_{porteur} - 0{,}0260417*H_2*I - 6{,}77083*H_2*Ar_{porteur} - 0{,}0352273*I*Ar_{porteur}$$

Les plages optimales et les plages acceptables, exprimées en termes de valeurs mini / maxi, de $I_{max}$ L et T sont les suivantes :

| Caractéristiques de projection | Ordre de priorité | Plages acceptables mini / maxi | Plages optimales mini / maxi |
|---|---|---|---|
| $I_{max}$ [0,255] | 1 | 20/40 | 19/20 |
| L (mm) | 2 | 2/9,8 | 2/5 |
| T (°C) | 3 | 190/280 | 190/220 |
| | | | |

Les valeurs initiales des paramètres d'alimentation et les plages de fonctionnement normal exprimées en terme de valeur mini / maxi sont donnés par le tableau suivant :

| Paramètres d'alimentation | Valeurs initiales | Plages de fonctionnement mini / maxi | Pas de correction |
|---|---|---|---|
| I(A) | 450 | 360 / 540 | 10 |
| Ar (Umn) | 45 | 36 1 54 | 1 |
| H2 (Umn) | 15 | 12/18 | 0,5 |
| Ar$_{porteur}$ (L/mn) | 2,5 | 2 / 3 | 0,1 |

Dans un cinquième exemple chiffré, les contraintes résiduelles du dépôt doivent être en compression et limitées à -400 MPa (mégaPascals), ce dépôt étant effectué avec la torche et la composition du dépôt précitées. Des expérimentations ont montré que la contrainte résiduelle est donnée par la formule suivante :

$$\text{Contrainte}_{MPa} = 720{,}92 - 2{,}5342 * T$$

L'opérateur utilise ici une seule équation, celle de T :

$$T = -417{,}125 + 3{,}7875 * Ar + 61{.}5625 * H_2 + 0{,}729545 * I + 51{.}25 * Ar_{porteur} - 0{,}380208 * Ar * H_2 - 0{,}00244318 * Ar * I - 0{,}0625 * Ar * Ar_{porteur} - 0{,}0260417 * H_2 * I - 6{,}77083 * H_2 * Ar_{porteur} - 0{,}0352273 * I * Ar_{porteur}$$

Les plages optimales et les plages acceptables, exprimées en termes de valeurs mini / maxi, de L et de T sont les suivantes :

| Caractéristiques de projection | Plages acceptables mini / maxi | Plages optimales mini / maxi |
|---|---|---|
| T (°C) | 280/ 360°C | 280 1 300°C |

Les valeurs initiales des paramètres d'alimentation et les plages de fonctionnement normal exprimées en terme de valeur mini / maxi sont donnés par le tableau suivant :

| Paramètres d'alimentation | Valeurs initiales | Plages de fonctionnement mini / maxi | Pas de correction |
|---|---|---|---|
| 1 (A) | 450 | 360/540 | 10 |
| Ar (Umn) | ??? | 36/54 | 1 |
| H2 (Umn) | ??? | 12118 | 0,5 |
| Ar$_{porteur}$ (Umn) | ??? | 2/3 | 0,1 |

Dans un quatrième exemple chiffré, un dépôt sans criques est recherché, ce dépôt étant effectué avec la torche et un dépôt de WCCo (carbure de tungstène et de cobalt). Les expérimentations ont montré que nombre de criques au mm$^2$ est donné par la formule suivante :

$$\text{Nombre de criques} = -0{,}22 + 0{,}5 * P + 0{,}00009 * I_{max}$$

Dans cette formule, un nombre de criques inférieur à zéro signifie qu'il n'y a pas de criques.
L'opérateur utilise ici le système d'équations suivant dans lequel P est prioritaire Imax, P ayant une influence prépondérante et $I_{max}$ une influence secondaire :

$$P = -7,85889 +0,0795898*Ar -0,0244141*H_2 +0,00776811*I +2,22168*Ar_{porteur} - 0,000712077*ArH_2 -0,0000521573*Ar*I -0,0266113*Ar*Ar_{porteur} -0,000616599*H_2*I +0,10376*H2*Ar_{porteur} -0,000998757*I*Ar_{porteur}$$

$$I_{max} = -45,2957 -1,51175*Ar + 38,2083*H_2 + 0,234739*I -8,94*Ar_{porteur} -0,39724*ArH_2 - 0,00272557*Ar*I +1,04463*Ar*Ar_{porteur} + 0,0170028*H_2*I -6,46563*H_2*Ar_{porteur} - 0,0231932*I*Ar_{porteur}$$

Les plages optimales et les plages acceptables, exprimées en termes de valeurs mini / maxi de $P$ et de $I_{max}$ sont les suivantes :

| Caractéristiques de projection | Ordre de priorité | Plages acceptables mini / maxi | Plages optimales mini / maxi |
|---|---|---|---|
| P (mm) | 1 | -5/1,2 | -5/1 |
| $I_{max}$ [0,255] | 2 | 20/100 | 20/50 |

Les valeurs initiales des paramètres d'alimentation et les plages de fonctionnement normal exprimées en terme de valeur mini / maxi sont donnés par le tableau suivant :

| Paramètres d'alimentation | Valeurs initiales | Plages de fonctionnement mini / maxi | Pas de correction |
|---|---|---|---|
| I(A) | 650 | 520/780 | 10 |
| Ar (Umn) | 45 | 36/54 | 1 |
| H2 (Umn) | 120 | 96/144 | 0,5 |
| $Ar_{porteur}$ (Umn) | 2,3 | 1,8/2,8 | 0,1 |

Ainsi, l'invention permet de garantir simultanément plusieurs caractéristiques de dépôt dans la mesure où se recoupent les plages de caractéristiques de projection établies pour chaque caractéristique du dépôt. Dans la mesure où ces plages ne se recoupent pas, il faut alors les agrandir et accepter une plus grande dispersion dans certaines caractéristiques du dépôt.

L'invention peut être facilement mise en oeuvre avec un micro-ordinateur du commerce équipé des interfaces appropriés pour recueillir les mesures des caractéristiques de projection et pour transmettre de nouvelles valeurs des paramètres d'alimentation à l'armoire de commande. D'autres architectures informatiques équivalentes sont possibles et ne sortent pas du cadre de l'invention. Par exemple, les moyens informatiques peuvent être ceux d'une station de travail commune à plusieurs machines. A l'inverse, il est également possible d'effectuer le calcul des mesures sur un premier ordinateur, par exemple embarqué avec les capteurs, et d'effectuer les traitements sur un second ordinateur, par exemple inclus dans l'armoire de commande.

On comprend que l'invention s'applique à tout type de torche de projection thermique puisque les mesures servant au pilotage sont faites sur les effets de la torche, en l'occurrence sur le jet qu'elle produit et sur la température du dépôt.

On comprend également que le logiciel assurant les fonctions décrites et revendiquées dans cette demande de brevet peut être écrit de différentes manières avec des algorithmes différents sans que l'instrument sorte du cadre de l'invention.

On comprend également que la base de donnée proposée est la forme préférée de mise en oeuvre de l'invention mais n'est pas indispensable. En effet, une solution plus primitive consistant à introduire chaque fois dans l'ordinateur les données nécessaires à une opération de projection thermique est également envisageable.

L'exemple de système d'information proposé est simple et permet d'organiser les informations nécessaires à une opération de projection thermique. Des modèles plus élaborés limitant les répétitions d'informations sont également envisageables.

Quelquefois, il peut être nécessaire de rattacher la plage de fonctionnement, le pas de correction ou l'ordre de priorité à la relation équation - paramètre d'alimentation, mais les exemples proposés ici ne l'exigent pas.

On comprend aussi que les capteurs doivent pouvoir suivre l'exécution de la projection thermique. Dans le cas où la torche est mobile, ces capteurs seront avantageusement attachés à la torche mais ils peuvent également suivre les déplacements de la torche par d'autres moyens. Les revendications couvrent également le cas d'une installation dans laquelle la torche serait fixe et la pièce à revêtir mobile devant la torche.

**Revendications**

1. Instrument de projection thermique (10) comportant une torche (12) de projection thermique, la torche (12) comportant un axe géométrique (14), la torche (12) étant susceptible de projeter un jet (16) selon son axe géométrique (14), le jet (16) étant constitué d'un flux de gaz à température élevée. l'instrument (10) comportant un ordinateur (100) communiquant à l'armoire de commande (30) les paramètres d'alimentation (122) l'instrument (10) comportant des capteurs (52) qui comportent une caméra (54) et (52) aptes à suivre les déplacements de la torche (12), les capteurs (52) étant susceptible de transmettre à l'ordinateur (100) des information (112,114) sur le fonctionnement de la torche (12), l'ordinateur (100) comporte un logiciel pour analyser en temps réel les informations (112,114), pour en déduire de façon répétitive la mesure d'au moins une caractéristique dite "de projection", pour repérer lorsque cette mesure est stabilisée, pour "traiter" cette caractéristique de projection, c'est à dire pour calculer et pour transmettre une nouvelle valeur de paramètre d'alimentation (122) lorsque la valeur mesurée de la caractéristique de projection est en dehors d'une plage de valeurs préétablie dite "acceptable" propre à la caractéristique de projection traitée, cette nouvelle valeur du paramètre d'alimentation étant appropriée pour rapprocher la caractéristique de projection vers sa plage acceptable, **caractérisé en ce que** le jet de plasma est chargé de particules en fusion du matériau à projeter, **en ce que** l'instrument de projection thermique (10) comporte une armoire de commande alimentant en ingrédients la torche, **en ce que** la caméra (54) est susceptible de fournir périodiquement à l'ordinateur (100) des informations (112, 114) sous la forme d'images (112) numériques du jet (16) vu de profil sur une partie de sa longueur, **en ce que** la caractéristique de projection mesurée sur les images (112) est la luminance maximale Imax du jet (16).

2. Instrument selon la revendication 1 **caractérisé en ce que** l'ordinateur (100) mesure et traite également la largeur L du jet (16), L constituant également une caractéristique de projection, un ordre de priorité étant défini dans le traitement des caractéristiques de projection, le traitement de la luminance maximale $I_{max}$ restant toutefois prioritaire, la caméra (54) étant susceptible d'observer le jet (16) avec une résolution au moins égale 0,5mmm, L étant proportionnel à l'écart type de la distribution de la luminance du jet (16) suivant une ligne géométrique (154) transversale au jet (16), afin de maîtriser également la dureté du revêtement (22).

3. Instrument selon la revendication 1 ou 2 **caractérisé en ce que** l'ordinateur (100) mesure et traite également la position P du jet (16), P constituant également une caractéristique de projection, un ordre de priorité étant défini dans le traitement des caractéristiques de projection, le traitement de la luminance maximale $I_{max}$ restant le plus prioritaire, la caméra (54) étant susceptible d'observer le jet (16) avec une résolution au moins égale 0,5mmm, P étant, à une valeur constante $P_0$ prés, la moyenne de la distribution de la luminance du jet (16) suivant une ligne géométrique (154) transversale au jet (16), afin de maîtriser également le taux de criques du revêtement (22).

4. Instrument selon l'une quelconque des revendications 1 à 3 **caractérisé en ce que** :

   d. les capteurs 52 comportent également un pyromètre optique (70) apte à mesurer à distance le rayonnement thermique à la surface d'une éventuelle pièce (22) à revêtir positionnée devant la torche (12), le pyromètre (70) ayant un champ étroit, le pyromètre étant positionné pour que le champ arrive au plus près du jet (16) sur la pièce (22) sans toutefois interférer avec ce jet (16), le pyromètre (70) étant également apte à transmettre périodiquement à l'ordinateur (100) la mesure de température par l'intermédiaire de la connexion capteurs - ordinateur (110), la mesure de température transmise à l'ordinateur étant référencée (114);
   e. l'ordinateur (100) est apte à corriger la mesure de température (114) en fonction du coefficient d'émissivité du revêtement (22), cette mesure T constituant alors également une caractéristique de projection, l'ordinateur (100) étant apte à traiter les caractéristiques de projection avec un ordre de priorité, le traitement de la luminance maximale $I_{max}$ étant le plus prioritaire, le traitement de la température T arrivant en priorité seconde, afin d'étendre le domaine de fonctionnement normal de la torche (12).

5. Instrument selon l'une quelconque des revendications 1 à 4 **caractérisé en ce que** l'ordinateur est apte à émettre un signal d'alerte lorsqu'une caractéristique de projection est en dehors de sa plage acceptable et qu'il ne peut calculer une nouvelle valeur de paramètre d'alimentation sans faire sortir la valeur de ce paramètre d'alimentation en dehors d'une plage dite "de fonctionnement normal" préétablie pour ce paramètre d'alimentation.

**6.** Instrument selon l'une quelconque des revendications 1 à 5 **caractérisé en ce que** l'opération de projection thermique est interrompue lorsqu'une caractéristique de projection est en dehors de sa plage acceptable et que l'ordinateur (100) ne peut calculer une nouvelle valeur de paramètre d'alimentation sans faire sortir la valeur de ce paramètre d'alimentation en dehors d'une plage dite "de fonctionnement normal" préétablie pour ce paramètre d'alimentation.

**7.** Instrument selon l'une quelconque des revendications 1 à 6 **caractérisé en ce que** l'ordinateur (100) est apte : à identifier la situation selon laquelle toutes les caractéristiques de projection utilisées sont chacune dans leur plage acceptable préétablie, à calculer et à transmettre à l'armoire de commande (30) une nouvelle valeur de paramètre d'alimentation (122) lorsque la valeur mesurée de la caractéristique de projection est en dehors d'une plage de valeurs préétablie dite "optimale" propre à la caractéristique de projection traitée, cette plage optimale étant incluse dans la plage acceptable, cette nouvelle valeur du paramètre d'alimentation étant appropriée pour rapprocher la caractéristique de projection vers sa plage optimale.

**8.** instrument selon l'une quelconque des revendications 1 à 7 **caractérisée en ce que** la caméra (52) comporte une matrice à accumulation de charge.

**9.** Instrument selon l'une quelconque des revendications 1 à 8 **caractérisé en ce que** la caméra est apte à fournir des images du jet (112) avec une résolution au moins égale à 0,1mm.

**10.** Instrument selon l'une quelconque des revendications 1 à 9, une flamme (17) émergeant de la torche (12) dans la zone du sommet du cône formé par le jet (16), **caractérisé en ce que** la caméra (54) est positionnée pour fournir des images (122) du jet (16) en aval de la flamme (17).

**11.** Instrument selon l'une quelconque des revendications 1 à 10, la torche (12) comportant un injecteur (18) de matière à projeter en poudre, cette injection s'effectuant à la sortie de la torche (12) suivant un axe géométrique (20) sensiblement perpendiculaire à axe géométrique de la torche (14), **caractérisé en ce que** la caméra (54) est positionnée pour voir le jet (16) suivant un axe géométrique (56) sensiblement orthogonal à l'axe géométrique (20) de l'injecteur (18).

**12.** Instrument selon l'une quelconque des revendications 1 à 11 **caractérisé en ce que** la luminance du jet (16) prise en compte dans le traitement est le niveau lumineux des pixels des images (112).

**13.** Instrument selon l'une quelconque des revendications 1 à 12 **caractérisé en ce que** ordinateur (100) est apte à ne prendre en compte que les pixels des images (112) dont le niveau lumineux est supérieur à une valeur préétablie.

**14.** Instrument selon l'une quelconque des revendications 1 à 13 **caractérisé en ce que** la luminance maximale Imax, de la largeur L et de la position P du jet (16) traitées par l'ordinateur (100) sont des moyennes sur des images regroupées en lots.

**15.** Instrument selon l'une quelconque des revendications 1 à 14 **caractérisé en ce que** l'une au moins des mesures effectuées sur les images (112), soit la luminance maximale $I_{max}$, la largeur L et la position P du jet(16), est déduite d'une loi de gauss de la forme $I_{max}.\exp(-(x-(P+P_0))^2/\sigma^2)/2\pi$.

**16.** Instrument selon la revendication 4 **caractérisé en ce que** le pyromètre 70 comporte un viseur à laser (74).

**Claims**

**1.** Thermal spray instrument (10) having a thermal spray torch (12), the torch (12) having a geometrical axis (14), the torch (12) being capable of spraying a jet (16) along its geometrical axis (14), the jet (16) consisting of a gas flow at elevated temperature laden with molten particles of the material to be sprayed, the instrument (10) having a control unit (30) supplying the torch (12) with ingredients by applying the supply parameters (122) which are communicated to it, the instrument (10) having a computer (100) communicating the supply parameters (122) to the control unit (30) by means of a control unit/computer connection (120), the instrument (10) having sensors (52) capable of monitoring the movements of the torch (12), the sensors (52) being capable of transmitting information (112, 114) about the operation of the torch (12) to the computer (100), this transmission being carried out by means of the sensors-computer connection (100),

the computer (100) having software for real-time analysis of the information (112, 114), in order to repetitively deduce therefrom the measurement of at least one so-called "spray" parameter so as to find when this measurement is stabilized, in order to "process" this spray characteristic, that is to say in order to calculate a new supply parameter value (122) and transmit it to the control unit (30) when the measured value of the spray characteristic is outside a pre-established "acceptable" range of values specific to the spray characteristic being processed, this new value of the supply parameter being suitable for returning the spray characteristic to its acceptable range, **characterized in that**:

the sensors (52) have a camera (54) capable of periodically providing the computer (100) with the information (112, 114) in the form of digital images (112) of the jet (16) as seen in profile over a part of its length,

the spray characteristic measured from the images (112) is the position P of the jet (16), the camera (54) being capable of the observing the jet (16) with a resolution at least equal to 0.5 mmm, P being, to within a constant value $P_0$, the average of the distribution of the luminance of the jet (16) along a geometrical line (154) transverse to the jet (16), in order to regulate the level of cracks of the coating (22) .

2. Instrument according to Claim 1, **characterized in that** the computer (100) also measures and processes the width L of the jet (16), L also constituting a spray parameter, an order of priority been defined in the processing of the spray characteristics, the processing of the position P of the jet being given the highest priority, L being proportional to the standard deviation of the distribution of the luminance of the jet (16) along a geometrical line (154) transverse to the jet (16), in order also to regulate the level of cracks of the coating (22).

3. Instrument according to Claim 1 or 2, **characterized in that**:

the sensors 52 also have an optical pyrometer (70) capable of remotely measuring the thermal radiation at the surface of some article (22) to be coated, which is positioned in front of the torch (12), the pyrometer (70) having a narrow field, the pyrometer being positioned so that the field comes as close as possible to the jet (16) on the article (22), but without interfering with this jet (16), the pyrometer (70) also being capable of periodically transmitting the temperature measurement to the computer (100) by means of the sensors-computer connection (110), the temperature measurement transmitted to the computer being referenced (114);

the computer (100) is capable of correcting the temperature measurement (114) as a function of the emissivity coefficient of the coating (22), T then also constituting a spray characteristic, the computer (100) being capable of processing the spray characteristics with an order of priority, the processing of the width L of the jet having the highest priority, in order to regulate the residual stresses of the deposit.

4. Instrument according to any one of Claims 1 to 3, **characterized in that** the computer (100) also measures and processes the maximum intensity $I_{max}$ of the jet (16), this measurement $I_{max}$ then also constituting a spray parameter, the computer (100) being capable of processing the spray characteristics with an order of priority, the processing of the width L of the jet having the highest priority, the processing of the maximum intensity $I_{max}$ of the jet coming second in priority, in order to extend the normal operating scope of the torch (12).

5. Instrument according to any one of Claims 1 to 4, **characterized in that** the computer is capable of emitting a warning signal when a spray characteristic is outside its acceptable range and it cannot calculate a new supply parameter value without making the value of the supply parameter depart from a "normal operating" range pre-established for this supply parameter.

6. Instrument according to any one of Claims 1 to 5, **characterized in that** the thermal spraying operation is interrupted when a spray characteristic is outside its acceptable range and the computer (100) cannot calculate a new supply parameter value without making the value of the supply parameter depart from a "normal operating" range pre-established for this supply parameter.

7. Instrument according to any one of Claims 1 to 6, **characterized in that** the computer (100) is capable of: identifying the situation according to which all the spray characteristics being used are each in their pre-established acceptable range, in calculating a new supply parameter value (122) and transmitting it to the control unit (30) when the measured value of the spray characteristic is outside a pre-established "optimum" range of values specific to the spray characteristic being processed, this optimum range being included in the acceptable range, this new value of the supply parameter being suitable for returning the spray characteristic to its optimum range.

8. Instrument according to any one of Claims 1 to 7, **characterized in that** the camera (52) has a charge accumulation matrix.

9. Instrument according to any one of Claims 1 to 8, **characterized in that** the camera is capable of providing images of the jet (112) with a resolution at least equal to 0.1 mm.

10. Instrument according to any one of Claims 1 to 9, with a flame (17) emerging from the torch (12) in the vicinity of the apex of the cone formed by the jet (16), **characterized in that** the camera (54) is positioned in order to provide images (122) of the jet (16) downstream of the flame (17).

11. Instrument according to any one of Claims 1 to 10, with the torch (12) having an injector (18) so as to spray powder, this injection taking place at the outlet of the torch (12) along a geometrical axis (20) substantially perpendicular to the geometrical axis of the torch (14), **characterized in that** the camera (54) is positioned in order to see the jet (16) along a geometrical axis (56) substantially orthogonal to the geometrical axis (20) of the injector (18).

12. Instrument according to any one of Claims 1 to 11, **characterized in that** the luminance of the jet (16), as taken into account in the processing, is the light level of the pixels of the images (112).

13. Instrument according to any one of Claims 1 to 12, **characterized in that** the computer (100) is capable of taking into account only the pixels of the images (112) whose light level is higher than a pre-established value.

14. Instrument according to any one of Claims 1 to 13, **characterized in that** the maximum luminance Imax, the width L and the position P of the jet (16) that are processed by the computer (100) are averages over the images grouped in batches.

15. Instrument according to any one of Claims 1 to 14, **characterized in that** at least one of the measurements taken from the images (112), namely the maximum luminance $I_{max}$, the width L and the position P of the jet (16), is deduced from a Gaussian law of the form $I_{max}.\exp(-(x-(P+P0))^2/\sigma^2)/2\pi$.

16. Instrument according to Claim 3, **characterized in that** the pyrometer 70 has a laser sight (74).

**Patentansprüche**

1. Thermische Spritz-Einrichtung (10), umfassend: ein Handteil (12) zum thermischen Spritzen, wobei das Handteil (12) eine geometrische Achse (14) umfasst, wobei das Handteil (12) dazu geeignet ist, einen Strahl (16) entlang seiner geometrischen Achse (14) zu spritzen, wobei der Strahl (16) aus einem Fluss von mit schmelzenden Partikeln des zu spritzenden Materials beladenem Gas bei erhöhter Temperatur besteht, wobei die Einrichtung (10) einen Steuer-Schrank (30) umfasst, welcher das Handteil (12) mit Ingredienzien versorgt, wobei die Zuführungs-Parameter (122), welche ihr übermittelt werden, angewendet werden,
wobei die Einrichtung (10) einen Computer (100) umfasst, welcher mittels einer Verbindung Schrank-Computer (120) dem Steuer-Schrank (30) die Zuführungs-Parameter (122) übermittelt, wobei die Einrichtung (10) Sensoren (52) umfasst, welche dazu geeignet sind, den Verschiebungen des Handteils (12) zu folgen, wobei die Sensoren (52) dazu geeignet sind, Informationen (112,114) bezüglich des Betriebs des Handteils (12) zum Computer (100) zu übertragen, wobei diese Übertragung mittels der Verbindung Sensoren-Computer (110) bewirkt wird,
wobei der Computer (100) eine Software zum Analysieren der Informationen (112,114) in Echtzeit umfasst, um aus ihnen in repetitiver Weise den Messwert von wenigstens einem als "dem Spritzen zugeordnet" bezeichneten Merkmal abzuleiten, um festzustellen, wenn dieser Messwert stabilisiert ist, um das Spritz-Merkmal zu "behandeln", das heißt, um einen neuen Zuführungs-Parameter-Wert (122) zu berechnen und zum Steuer-Schrank (30) zu übertragen, wenn der gemessene Wert des Spritz-Merkmals sich außerhalb eines als "akzeptabel" bezeichneten, dem behandelten Spritz-Merkmal eigenen, vorher festgelegten Werte-Bereiches befindet, wobei dieser neue Wert des Zuführungs-Parameters dazu geeignet ist, das Spritz-Merkmal sich seinem Akzeptanz-Bereich annähern zu lassen, **dadurch gekennzeichnet, dass**:

die Sensoren (52) eine Kamera (54) umfassen, welche dazu geeignet ist, dem Computer (100) periodisch Informationen (112, 114) in der Form von numerischen Bildern (112) des Strahls, im Profil entlang eines Teils seiner Länge gesehen, zu liefern,

das auf den Bildern (112) gemessene Spritz-Merkmal die Position P des Strahls (16) ist, wobei die Kamera (54) dazu geeignet ist, den Strahl (16) mit einer Auflösung von wenigstens 0,5 mm zu beobachten, wobei P in einem nahen Konstant-Wert $P_0$ der Mittelwert der Verteilung der Leuchtdichte des Strahls (16) entlang einer geometrischen Linie (154) quer zum Strahl (16) ist, um die Einschnitt-Rate des Überzugs (22) zu beherrschen.

2. Einrichtung gemäß Anspruch 1, **dadurch gekennzeichnet, dass**:

der Computer (100) ebenfalls die Breite/Ausdehnung L des Strahls (16) misst und behandelt, wobei L ebenfalls ein Spritz-Merkmal bildet, wobei beim Behandeln der Spritz-Merkmale eine Prioritäts-Ordnung definiert ist, wobei das Behandeln der Position P des Strahls jedoch vorrangig bleibt, wobei L proportional zum Abstand-Typ der Verteilung der Leuchtstärke des Strahls (16) entlang einer geometrischen Linie (154) quer zum Strahl (16) ist, um gleichermaßen die Härte des Überzugs (22) zu beherrschen.

3. Einrichtung gemäß Anspruch 1 oder 2, **dadurch gekennzeichnet, dass**:

d. die Sensoren (52) gleichermaßen ein optisches Pyrometer (70) umfassen, welches dazu geeignet ist, auf Distanz die thermische Strahlung an der Oberfläche eines möglicherweise vorhandenen, zu beschichtenden Teils (22) zu messen, welches vor dem Handteil (12) angeordnet ist, wobei das Pyrometer (70) ein enges Feld aufweist, wobei das Pyrometer positioniert ist, damit das Feld dem Strahl (16) auf das Teil (22) so nahe wie möglich kommt, ohne jedoch mit dem Strahl (16) zu intervenieren, wobei das Pyrometer (70) gleichermaßen dazu geeignet ist, den Temperatur-Messwert mittels der Verbindung Sensoren-Computer (110) periodisch zum Computer (100) zu übertragen, wobei auf den zum Computer übertragenen Temperatur-Messwert als (114) Bezug genommen wird;

e. der Computer (100) dazu geeignet ist, den Temperatur-Messwert (114) in Abhängigkeit vom Emissivitäts-Koeffizienten des Überzugs (22) zu korrigieren, wobei T dann ebenfalls ein Spritz-Merkmal bildet, wobei der Computer (100) dazu geeignet ist, die Spritz-Merkmale gemäß einer Prioritäts-Ordnung zu behandeln, wobei das Behandeln der Breite/Ausdehnung L des Strahls jedoch das vorrangigste bleibt, um die verbleibenden Spannungen der Ablagerung zu beherrschen.

4. Einrichtung gemäß einem der Ansprüche 1 bis 3, **dadurch gekennzeichnet, dass** der Computer (100) ebenfalls die Maximal-Intensität $I_{max}$ des Strahls (16) misst und behandelt, wobei der Messwert $I_{max}$ dann ebenfalls ein Spritz-Merkmal bildet, wobei der Computer (100) dazu geeignet ist, die Spritz-Merkmale mit einer Prioritäts-Ordnung zu behandeln, wobei das Behandeln der Breite/Ausdehnung L das vorrangigste ist, wobei das Behandeln der Maximal-Intensität $I_{max}$ des Strahls an zweiter Stelle der Priorität kommt, um den normalen Funktionsbereich des Handteils (12) auszuweiten.

5. Einrichtung gemäß einem der Ansprüche 1 bis 4, **dadurch gekennzeichnet, dass** der Computer dazu geeignet ist, ein Warn-Signal auszugeben, wenn sich ein Spritz-Merkmal außerhalb seines Akzeptanz-Bereiches befindet, und wenn er keinen neuen Zuführungs-Parameter-Wert berechnen kann, ohne den Wert dieses Zuführungs-Parameters den genannten, vorab für diesen Zuführungs-Parameter festgelegten, als "im Normal-Betrieb" bezeichneten, Bereich verlassen zu lassen.

6. Einrichtung gemäß einem der Ansprüche 1 bis 5, **dadurch gekennzeichnet, dass** der thermische Spritz-Vorgang unterbrochen wird, wenn sich ein Spritz-Merkmal außerhalb seines Akzeptanz-Bereiches befindet, und wenn der Computer (100) nicht einen neuen Zuführungs-Parameter-Wert berechnen kann, ohne den Wert dieses Zuführungs-Parameters einen vorab für diesen Zuführungs-Parameter festgelegten, als "im Normal-Betrieb" bezeichneten, Bereich verlassen zu lassen.

7. Einrichtung gemäß einem der Ansprüche 1 bis 6, **dadurch gekennzeichnet, dass** der Computer (100) dazu geeignet ist: die Situation zu identifizieren, bei welcher sich alle verwendeten Spritz-Merkmale jeweils in ihrem vorbestimmten Akzeptanz-Bereich befinden, einen neuen Zuführungs-Parameter-Wert (122) zu berechnen und zum Steuer-Schrank (30) zu übertragen, wenn sich der gemessene Wert des Spritz-Merkmals außerhalb eines vorbestimmten, als "optimal" bezeichneten, Werte-Bereiches befindet, welcher dem behandelten Spritz-Merkmal eigen ist, wobei dieser optimale Bereich im Akzeptanz-Bereich enthalten ist, wobei dieser neue Zuführungs-Parameter-Wert dazu geeignet ist, das Spritz-Merkmal sich seinem Optimal-Bereich annähern zu lassen.

8.  Einrichtung gemäß einem der Ansprüche 1 bis 7, **dadurch gekennzeichnet, dass** die Kamera (52) eine Matrix zur Ladungs-Akkumulation umfasst.

9.  Einrichtung gemäß einem der Ansprüche 1 bis 8, **dadurch gekennzeichnet, dass** die Kamera dazu geeignet ist, Bilder des Strahls (112) mit einer Auflösung zu liefern, welche wenigstens gleich 0,1 mm ist.

10. Einrichtung gemäß einem der Ansprüche 1 bis 9, wobei in der Zone des Scheitelpunktes des vom Strahl (16) gebildeten Kegels dem Handteil (12) eine Flamme (17) entweicht, **dadurch gekennzeichnet, dass** die Kamera (54) geeignet positioniert ist, um Bilder (122) des Strahls (16) stromabwärts von der Flamme (17) zu liefern.

11. Einrichtung gemäß einem der Ansprüche 1 bis 10, wobei das Handteil (12) eine Injektions-Vorrichtung (18) für als Pulver zu spritzendes Material umfasst, wobei diese Injektion am Ausgang des Handteils (12) bewirkt wird, einer geometrischen Achse (20) folgend, welche im Wesentlichen senkrecht zu der geometrischen Achse (14) des Handteils ist, **dadurch gekennzeichnet, dass** die Kamera (54) derart positioniert ist, dass sie den Strahl (16) entlang einer geometrischen Achse (56) sieht, welche im Wesentlichen senkrecht zur geometrischen Achse (20) der Injektions-Vorrichtung (18) ist.

12. Einrichtung gemäß einem der Ansprüche 1 bis 11, **dadurch gekennzeichnet, dass** die beim Behandeln berücksichtigte Leuchtdichte des Strahls (16) das Leuchtstärke-Niveau der Pixel der Bilder (112) ist.

13. Einrichtung gemäß einem der Ansprüche 1 bis 12, **dadurch gekennzeichnet, dass** der Computer (100) dazu geeignet ist, nur die Pixel von denjenigen Bildern (112) zu berücksichtigen, deren Leuchtstärke-Niveau einen vorbestimmten Wert übersteigt.

14. Einrichtung gemäß einem der Ansprüche 1 bis 13, **dadurch gekennzeichnet, dass** die maximale Leuchtdichte Imax, die Breite/Ausdehnung L und die Position P des Strahls (16), welche vom Computer (100) behandelt sind, Mittelwerte auf den Bildern sind, welche als Lose neu gruppiert sind.

15. Einrichtung gemäß einem der Ansprüche 1 bis 14, **dadurch gekennzeichnet, dass** wenigstens einer der Messwerte, welche auf den Bildern (122) bewirkt sind, sei es die Maximal-Leuchtstärke $I_{max}$, die Breite/Ausdehnung L oder die Position P des Strahls (16), aus einem Gauss-Gesetz der Form $I_{max} \cdot \exp(-(x-(P+P0))^2/\sigma^2)/2\pi$ hergeleitet ist.

16. Einrichtung gemäß Anspruch 3, **dadurch gekennzeichnet, dass** das Pyrometer 70 ein Laser-Sichtgerät (74) um-fasst.

Fig : 1

Fig : 6

**Fig : 2**

**Fig : 3**

**Fig : 4**

**Désignation** —1

— Modèle de torche
— Composition du dépôt
— Caractéristiques

1 — **Modèle** — 1

1

1

**Informations générales** — 1

— Coefficient d 'émissivité
— Période d 'acquisition des images
— Nombre d 'images par lot
— Niveau des bruits de fond
— Niveau de stabilité du jet

n

n

**Caractéristiques de projection** 1 — 1 **Équation** n — n **Paramètres d 'alimentation**

— Ordre de priorité

— Plage acceptable
  — Valeur minimale
  — Valeur maximale

— Plage optimale
  — Valeur minimale
  — Valeur maximale

— Valeur initiale

— Plage de fonctionnement
  — Valeur minimale
  — Valeur maximale

— Pas de correction

— Ordre de priorité

**Fig : 5**

EP 1 340 580 B1

**Fig : 7**

Envoyer à l'armoire de commande les valeurs
initiales des paramètres d'alimentation.

Acquérir et stocker une image.

Nombre d'images stockées < N1 ?

Oui          Non

Calculer pour chaque image
Imax, L et P

Calculer les écarts entre images sur
Imax, L et P

Ecarts > niveau de stabilité du jet ?

Oui          Non

Calculer les moyennes de
Imax, L et P

Acquérir une température et la
corriger en fonction de l'émissivité
du dépôt

Caractéristique de projection hors
plage acceptable ?

Oui          Non

Etablir correction d'un paramètre
d'alimentation

Caractéristique de projection hors
plage optimale ?

Correction possible ?

Non

Non          Oui

Stop          Oui

Etablir correction d'un paramètre
d'alimentation

Correction possible ?

Transmettre correction à l'armoire
de commande

Oui          Non